# EUROPEAN PATENT APPLICATION

(11) **EP 2 175 082 A1**
(43) Date of publication of application: **14.04.2010**
(21) Application number: 08775421.4
(22) Date of filing: 02.06.2008
(51) Int. Cl.: E04C 2/20

(54) **METHOD FOR PRODUCTION OF WALL COVERING PANELS, AND PANEL OBTAINED WITH SAID METHOD**

(30) Priority: 05.06.2007 ES 200701547
(71) Applicant: Iñigo Espinosa, Joaquin Maria, 08197 Valldoreix (Barcelona) (ES); Alvarez Moral, Esther, 08197 Valldoreix (Barcelona) (ES)
(72) Inventor: Iñigo Espinosa, Joaquin Maria, 08197 Valldoreix (Barcelona) (ES); Alvarez Moral, Esther, 08197 Valldoreix (Barcelona) (ES)
(74) Representative: Toro Gordillo, Ignacio Maria
(86) International application number: PCT/ES2008/000393
(87) International publication number: WO 2008/148906

(57) **Abstract**

Especially designed for replacing standard panels based on ceramic plates, the invention consists in putting a design (2) on the back side of a core or panel (1) of metacrylate, polycarbonate or other similar transparent plastic material, a design which is partly removed by milled slots or grooves (3), positioned for example to match the original joint lines for ceramic pieces; a layer o paint (4) is applied to said back face (4) and is visible through the background of said grooves (3) and visually enhances the appearance of said joints, while in the front face (5) of the assembly slots (6) are set to positionally match the lower slots (5) which give a bas-relief effect to the panel, wherein the front face is coated with a protective epoxy resin or other similar transparent material. The above method provides a panel which imitates standard tiling, but is much lighter, more easily fitted and with better features.

## Description

### Field of the Invention

The present invention relates to a method for the manufacture of panels, especially conceived for the covering of walls, such as for example kitchen and bathroom walls, with a vitreous ceramic appearance similar to that of a conventional covering based on glazed tiles, ceramic tiles, vitreous glass mosaic tiles or other commonly used materials.

The object of the invention is to be able to quickly carry out the construction, with the consequent and beneficial repercussion this entails in connection to costs, while at the same time achieving panels which are lightweight, resistant and having a high degree of both thermal and acoustic insulation.

The invention is therefore encompassed in the field of construction, and more specifically in the field of materials for the covering of surfaces, preferably walls.

### Background of the Invention

In the preferred field of practical application of the invention, the tiling of walls in bathrooms, kitchens and other rooms, different types of decorative materials are used, but obviously the classic and most used solution today is the use of ceramic pieces, those commonly called glazed tiles, which are assembled on the wall by means of complex brickworks, which require highly qualified personnel, being slow and consequently expensive and the level of finish of which is unpredictable, even being unsatisfactory.

Furthermore and in relation to the remodeling of rooms previously in use, a large amount of rubble is generated, contributing to increasing the aforementioned problem.

These coverings use pieces having a considerable weight, between which pieces joints are defined, generally occupied by white cement, which are permanently dirty and require subsequent and periodic cleaning operations, which are also slow and tedious.

Due to their actual nature, these coverings furthermore have a very low coefficient of both thermal and acoustic insulation which translates into considerable energy loses and the transmission of more or less undesirable noises to the surrounding rooms.

### Description of the Invention

The method proposed by the invention, as well as the panel resulting therefrom, solves each and every one of the various aspects of the aforementioned drawbacks discussed in a fully satisfactory manner.

To that end and more specifically, the method which is proposed starts from the use of a large panel based on methacrylate, polycarbonate or another similar material, in any case transparent, which due to its actual nature is very lightweight and has a high coefficient of both thermal and acoustic insulation.

A design is applied on the back face of this panel, which design is preferably established on a support sheet, which must be visible through the front face of the mentioned plastic and transparent panel and which will consequently vary in a virtually unlimited manner, according to any design criterion.

Once the design is fixed to the plastic panel by means of an adhesive or by any other means, a milling is carried out on the back face of the assembly, for example a milling or extrusion determining grooves distributed in a grid, when it is intended that the covering be similar to a tiling, in which said grooves would match the joints between the imaginary ceramic pieces thereof in size, shape and position.

Next, a paint is applied on the back slotted face of the panel, which paint will be concealed by the design where such panel has not been milled, and will be visible through the grooves simulating, in the front view of the assembly, the mentioned joints between ceramic pieces.

Indistinctly after or before the previous milling operation, another milling operation is carried out, in this case on the front face of the panel, defining slots complementary to the previous ones, positionally matching them, determining bas-reliefs which simulate the rounded edges of classic ceramic plates, to which effect said slots or millings will adopt a rounded vertex V shape.

The process ends with a finishing of the front face of the panel, such as for example a varnishing with transparent epoxy resin, to protect the plastic material against possible rubbing or any other type of external agents, giving it a suitable hardness.

It must be mentioned that the subsequent milling of the panel can be replaced by lines printed in the same base design.

A lightweight, easy-to-assemble, highly resistant panel with a high coefficient of both thermal and acoustic insulation, capable of perfectly simulating a conventional tiling based on ceramic pieces, but without the drawbacks of this type of covering, is thus achieved with the particularity that if laths are used to fix the panel to the wall, there can be enough space between both elements in order to install the electrical installations, plumbing installations, etc., without having to make channels as occurs with conventional coverings.

The ease in assembly deserves special mention since it is very easy to work with conventional tools, further allowing an optimal finish.

Although the present description is made based on the preferred application of the invention, i.e., the covering of walls, the panel of the invention can likewise be used in the manufacture of furniture, frontal panels for furniture and drawers, bed headboards, chair rails, friezes, etc., and the mentioned preferred application is not limited to furniture and kitchens of homes, but also to trailers, ships, the manufacture of hydromassage cabins, etc.

### Description of the Drawings

To complement the description being made and for the purpose of aiding to better understand the features of the invention according to a preferred practical embodiment thereof, a set of drawings is attached as an integral part of said description, in which the following is depicted with an illustrative and non-limiting character:
Figure 1 shows, according to a perspective view of a schematic depiction, the first phase of the method for the manufacture of wall covering panels which form the object of the present invention.
Figure 2 shows, according to a perspective view similar to the previous one, the second phase of the method.
Figure 3 shows again, according to a depiction similar to the previous figures, the third phase of the method.
Figure 4 shows a new phase of the same method.
Figure 5 finally shows a perspective view of the panel obtained with the method of the previous figures.

### Preferred Embodiment of the Invention

In view of the indicated figures it can be observed how the proposed method starts from the use of a panel (1) of a suitable plastic material, such as for example methacrylate, polycarbonate or the like, with both perimetric and thickness dimensions suitable for the provided specific application, and in any case of a transparent nature.

A sheet (2) carrying the design or motif which is to customize the covering, such as for example reproducing the visible face of a tiled surface, i.e., of a plurality of glazed tiles or ceramic pieces distributed in a grid, is fixed to the back face of the panel to be obtained.

Next and in accordance with the joint lines between the imaginary joining pieces which participate in the design (2), on the back face of the described assembly and more specifically integrally affecting the sheet (2), a series of grooves (3) which can affect the panel (1) to a greater or lesser extent and the function of which is to remove from the design those lines or fringes corresponding to the imaginary joint lines between the simulated ceramic pieces, is carried out by means of milling.

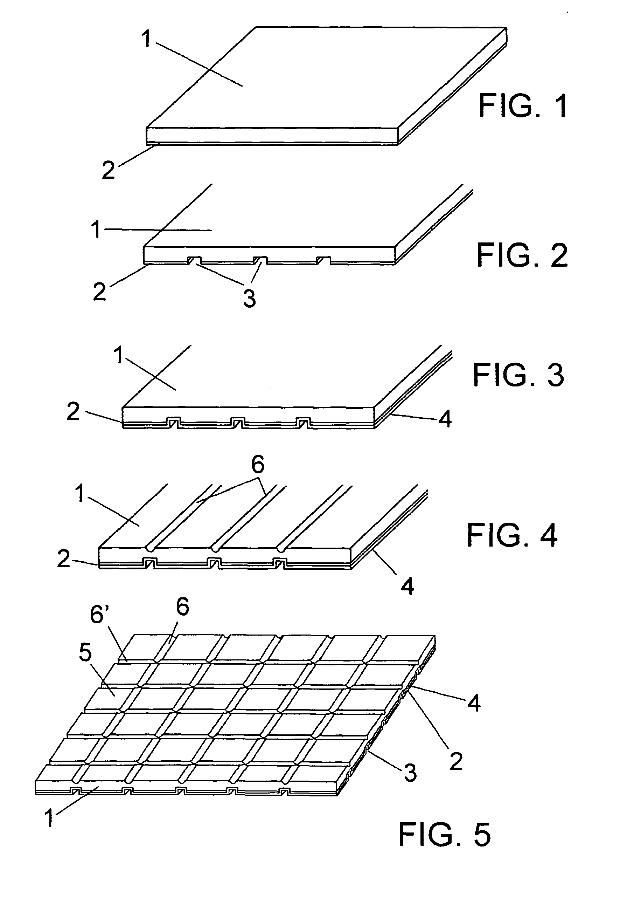

Taking into account that the sheet (2) supporting the design is completely opaque, a layer of paint (4) is applied to the back face of the assembly depicted in Figure 2, as shown in Figure 3, so that said layer of paint, for example white colored paint, will determine the joints between the imaginary ceramic pieces.

Finally and as is shown in Figures 4 and 5, a milling is carried out on the front face (5) of the assembly to obtain longitudinal slots (6) and transverse slots (6'), positionally matching the previously mentioned slots (3) and preferably being V-shaped and having rounded vertexes, as especially shown in Figure 4, in order to provide the panel with reliefs in its front face which simulate the joints between pieces of glazed tile, said already milled front face (5) being subjected to a varnishing with a epoxy resin or another similar transparent product, which confers the mentioned front face of the panel the suitable degree of hardness and mechanical strength against the actions which a wall covering normally sustains during the use thereof.

A panel like the one depicted in Figure 5, which can adopt for example a "gresite", or vitreous glass mosaic tile, type appearance, i.e., based on small quadrangular tesserae, or any other ornamental appearance according to any design line, is thus obtained.

The previously mentioned grooves can also be carried out in the manufacture of the panel by means of an extrusion method.

## Claims

1. A method for the manufacture of wall covering panels, especially provided for adopting the appearance of a classic covering based on ceramic pieces, **characterized in that** starting from a panel (1) of a plastic nature, preferably of methacrylate, polycarbonate or the like, in any case of a transparent nature, on the back face thereof, there is fixed a design, preferably established on a laminar support (2), which is fixed by means of an adhesive or by any other means to the plastic panel (1), a milling being performed on the back face of the panel in a following operative phase to be carried out, integrally affecting the laminar support (2) of the design, which is in turn opaque, in order to determine therein interruptions in accordance with the joint lines between the imaginary glazed tiles represented by the panel, a layer of paint (4), which colors the background of the grooves (3) and which can accordingly be seen through the front face of the panel simulating the joints between the mentioned imaginary ceramic pieces, being applied next to the back face of the assembly, the method concluding with a milling on the front face of the plastic panel (1), in which slots (6-6') are defined to positionally match the slots (3) of its back face, determining bas-reliefs which further enhance the appearance of tiling of the panel as a whole, said front face of the panel finally being finished by means of varnishing with epoxy resin or another similar transparent material, which confers the suitable strength and hardness characteristics to the panel.

2. A panel obtained with the method of claim 1, **characterized in that** it is formed from a core (1), in turn carried out in a panel of a plastic nature, preferably of methacrylate, polycarbonate or another similar transparent product, provided in one of its faces with a plurality of slots or grooves (3) which affect an opaque sheet (2) carrying the design provided for the panel as a whole, said sheet (2) being covered, like the slots or grooves (3), by a layer of paint (4) intended to be visible through the background of the grooves (3) and, like the design (2) itself, visible through the transparent body (1) of the panel, on the front face of which there are in turn slots (6-6') positionally matching the slots (3) of the back face thereof, and which confer to the design of the panel a three-dimensional appearance, similar to that of the rounded joints between glazed tiles of a tiled surface, this front face of the plastic core (1) being integrally covered by a layer of epoxy resin or any other similar protective transparent material for the visible face of the panel.

3. The panel obtained with the method of the previous claims, **characterized** according to the previous claims in that the milling in the back part of the panel can be replaced by suitably colored lines printed in the same design.

4. The panel obtained with the method of the previous claims, **characterized** according to the previous claims in that the grooves can be carried out by means of an extrusion method.
